Europäisches Patentamt

European Patent Office

Office européen des brevets

(19)

(11) **EP 0 776 936 B1**

(12) **EUROPÄISCHE PATENTSCHRIFT**

(45) Veröffentlichungstag und Bekanntmachung des Hinweises auf die Patenterteilung:
**03.03.1999 Patentblatt 1999/09**

(51) Int Cl.6: **C08K 13/06**, C08L 83/04, C08K 5/05

(21) Anmeldenummer: **96119510.4**

(22) Anmeldetag: **05.12.1996**

(54) **Verfahren zur Herstellung lagerstabiler oxidische verstärkende Füllstoffe enthaltender Organopolysiloxanzusammensetzungen**

Process for preparing storage stable organopolysiloxane compositions containing reinforcing oxide fillers

Procédé de fabrication des compositions d'organopolysiloxanes stables au stockage contenant des charges d'oxides

(84) Benannte Vertragsstaaten:
**DE FR GB**

(30) Priorität: **05.12.1995 DE 19545365**

(43) Veröffentlichungstag der Anmeldung:
**04.06.1997 Patentblatt 1997/23**

(73) Patentinhaber: **Wacker-Chemie GmbH
81737 München (DE)**

(72) Erfinder:
• **Schuster, Johann, Dr.
84547 Emmerting (DE)**
• **Müller, Horst, Dr.
84547 Emmerting (DE)**
• **Mersch, Johann
5122 Ach (AT)**
• **Glöcklhofer, Heinrich
84489 Burghausen (DE)**
• **Maier, Anton
84489 Burghausen (DE)**

(74) Vertreter: **Fritz, Helmut, Dr. et al
Wacker-Chemie GmbH,
Zentralabteilung Patente,
Marken und Lizenzen,
Hanns-Seidel-Platz 4
81737 München (DE)**

(56) Entgegenhaltungen:
EP-A- 0 134 685          EP-A- 0 544 257
US-A- 2 755 261

• **PATENT ABSTRACTS OF JAPAN vol. 016, no. 001 (C-0899), 7.Januar 1992 & JP 03 229727 A (SHIN ETSU CHEM CO LTD), 11.Oktober 1991,**

**Beschreibung**

Die Erfindung betrifft ein Verfahren zur Herstellung von lagerstabilen additionsvernetzenden Organopolysiloxanzusammensetzungen, die einen vorhydrophobierten verstärkenden Füllstoff und eine Verbindung, die ausgewählt wird aus linearer Silanolverbindungen und gesättigtem Alkanol enthalten.

Zusammensetzungen aus Organopolysiloxan und hydrophobem oxidischem verstärkendem Füllstoff können nach zwei Grundverfahren hergestellt werden:

Bei dem ersten Verfahren werden hydrophiler Füllstoff und Organopolysiloxan in Anwesenheit eines Hydrophobierungsmittels für den Füllstoff vermischt. Die Hydrophobierung findet also in-situ statt.

Das in-situ-Verfahren weist jedoch die Nachteile langer Chargenlaufzeit und hoher Emissionen auf, die an vielen Stellen auftreten und dadurch schwer beherrschbar werden. Weiter ist eine gezielte Steuerung der Hydrophobierung kaum möglich und auch Korrekturen der Füllstoffgehalte der Zusammensetzungen sind nicht mehr möglich, da geeignete Füllstoffe fehlen.

Bei dem zweiten Verfahren werden vorhydrophobierter Füllstoff und Organopolysiloxan vermischt. Ein Verfahren zur Hydrophobierung von oxidischem verstärkendem Füllstoff ist in US-A-5,057,151 beschrieben. Dort wird der hydrophile Füllstoff in einem Überschuß an Hydrophobierungsmittel mechanisch beansprucht. Anschließend wird überschüssiges Hydrophobierungsmittel abgezogen und in den Prozeß zurückgeführt.

Beim Vorhydrophobieren des Füllstoffes ist es möglich, den Hydrophobierungsgrad gezielt zu steuern und in weiten Grenzen zu variieren, wobei hohe und/oder gleichmäßige Hydrophobierungsgrade möglich sind, was für viele Anwendungen Voraussetzung ist. Das Verfahren zur Vorhydrophobierung erlaubt es, den Füllstoff so zu hydrophobieren, daß damit durch einfaches Mischen des hydrophobierten Füllstoffes mit Organopolysiloxan vernetzbare Organopolysiloxanzusammensetzungen hergestellt werden können. Die Verwendung von vorab hydrophobiertem Füllstoff führt zu einer deutlichen Kapazitätssteigerung der Mischorgane. Emissionen werden auf eine zentrale Anlage begrenzt und sind dadurch leichter beherrschbar. Der Verbrauch an Hydrophobierungsmittel kann gegenüber dem in-situ-Verfahren deutlich reduziert werden. Der Füllstoffgehalt der Zusammensetzungen läßt sich nachträglich leicht durch Zusatz von weiterem Füllstoff korrigieren.

Organopolysiloxanzusammensetzungen, die einen vorhydrophobierten verstärkenden Füllstoff, wie pyrogen hergestellte Kieselsäure enthalten, zeigen bei der Lagerung einen Viskositätsanstieg. Der Viskositätsanstieg kann beispielsweise in Einzelfällen so stark sein, daß nach einer Lagerzeit von einigen Wochen die Masse gummielastisches Verhalten zeigt und dadurch nicht mehr verarbeitbar ist. Der Viskositätsanstieg kann bei peroxidisch vernetzenden Organopolysiloxanzusammensetzungen durch Zugabe eines niederviskosen Organopolysiloxans ausgeglichen werden. Bei additionsvernetzenden Organopolysiloxanzusammensetzungen ist dies nicht möglich.

Der vorliegenden Erfindung liegt die Aufgabe zugrunde, den Viskositätsanstieg von vorhydrophobierte verstärkende Füllstoffe enthaltenden Grundmischungen für additionsvernetzende Organopolysiloxanzusammensetzungen und von vorhydrophobierte verstärkende Füllstoffe enthaltenden Komponenten für additionsvernetzende Organopolysiloxanzusammensetzungen während der Lagerung zu reduzieren.

Die Erfindung betrifft ein Verfahren zur Herstellung von Organopolysiloxanzusammensetzungen, bei dem

(1) Organopolysiloxane, die durchschnittlich mindestens 2 aliphatische Kohlenstoff-Kohlenstoff-Mehrfachbindungen pro Molekül aufweisen,
(2) vorhydrophobierte oxidische verstärkende Füllstoffe mit einem durch die Hydrophobierung erhaltenen Kohlenstoffgehalt von mindestens 0,5 Gew.-% und
(3) auf 100 Gewichtsteile der Organopolysiloxane (1) 0,01 bis 1 Gewichtsteile an Verbindungen, die ausgewählt werden aus

(3a) Silanolverbindungen der allgemeinen Formel I

$$R\text{-}[SiR_2\text{-}O\text{-}]_a H \qquad (I),$$

wobei

**R** $C_1$- bis $C_6$-Alkylreste und
**a** Werte von 1 bis 10 bedeuten, und

(3b) gesättigten $C_1$- bis $C_{18}$-Alkanolen vermischt werden.

In der allgemeinen Formel I weist a vorzugsweise höchstens Werte bis 6, insbesondere die Werte 1, 2 oder 3 auf.

Die Kohlenwasserstoffreste **R** können $C_1$- bis $C_{10}$-Alkyl-, $C_1$- bis $C_{10}$-Alkaryl- oder $C_1$- bis $C_{10}$-Aralkylreste deren Alkylteil gesättigt ist, oder $C_1$- bis $C_{10}$-Arylreste sein. Beispiele für Alkylreste R sind der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexyl- und Cyclohexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Cycloalkylreste, wie der Cyclohexylrest; Beispiele für Alkarylreste **R** sind der α- und β-Phenylethylrest; Beispiele für Aralkylreste **R** sind der Benzylrest und der 2,4-Diethylbenzylrest; Beispiele für Arylreste **R** sind der Phenylrest und der Naphthylrest.

Vorzugsweise bedeutet **R** Methyl- und Ethylreste. Insbesondere bevorzugt als Silanolverbindungen (3a) sind Trimethylsilanol und Pentamethyldisiloxanol.

Beispiele für gesättigte $C_1$- bis $C_{18}$-Alkanole (3b) sind Methanol, Ethanol, n-Propanol, iso-Propanol, 1-n-Butanol, 2-n-Butanol, iso-Butanol, 1-n-Pentanol, iso-Pentanol, neo-tert.-Pentanol; Hexanole, wie 1-n-Hexanol; Heptanole, wie 1-n-Heptanol; Octanole, wie 1-n-Octanol; Nonanole, wie 1-n-Nonanol; Decanole, wie 1-n-Decanol; 1-n-Dodecanol, 1-n-Tetradecanol, 1-n-Hexadecanol und Stearylalkohol; und Cycloalkanole, wie Cyclohexanol.

Die gesättigten $C_3$- bis $C_8$-Alkanole (3b) sind bevorzugt, insbesondere die verzweigten Alkanole.

Die vorhydrophobierten oxidischen verstärkenden Füllstoffe (2) sind vorzugsweise jeweils vorhydrophobierte pulverförmige Füllstoffe, wie pyrogen hergestellte Kieselsäure, gefällte Kieselsäure und Silicium-Aluminium-Mischoxide oder faserförmige Füllstoffe, wie Asbest. Es kann eine Art von Füllstoff, es kann auch ein Gemisch von mindestens zwei Füllstoffen eingesetzt werden. Der durch die Hydrophobierung erhaltene Kohlenstoffgehalt der Füllstoffe (2) beträgt vorzugsweise mindestens 1 Gew.-% und vorzugsweise höchstens 6 Gew.-%. Bei der Bestimmung des Kohlenstoffgehalts der Füllstoffe (2) wird durch eine Trocknung von mindestens 2 Stunden bei mindestens 200°C sichergestellt, daß der gemessene Kohlenstoffgehalt sich auf die hydrophobierende Schicht der Füllstoffe (2) bezieht.

Besonders bevorzugt als verstärkende Füllstoffe (2) sind pyrogen hergestellte Kieselsäure und gefällte Kieselsäure. Vorzugsweise beträgt die BET-Oberfläche der Füllstoffe (2) mindestens 50 $m^2$/g, insbesondere mindestens 100 $m^2$/g, speziell mindestens 150 $m^2$/g.

Die Füllstoffe (2) sind durch die Behandlung mit beispielsweise Organosilanen, -silazanen bzw. -siloxanen oder durch Verätherung von Hydroxylgruppen zu Alkoxygruppen hydrophobiert. Ein bevorzugtes Verfahren zur Hydrophobierung ist in US-A-5,057,151 beschrieben.

Als Organopolysiloxane (1) werden vorzugsweise lineare oder verzweigte Organopolysiloxane aus Einheiten der allgemeinen Formel II

$$R^1_c R^2_d SiO_{\frac{4-c-d}{2}} \tag{II},$$

eingesetzt, wobei

**R¹**    einwertige, gegebenenfalls mit Halogenatomen substituierte $C_1$- bis $C_{10}$-Kohlenwasserstoffreste, die frei sind von aliphatischen Kohlenstoff-Kohlenstoff-Mehrfachbindungen ,

**R²**    Wasserstoffatome, Hydroxylgruppen oder einwertige Kohlenwasserstoffreste mit aliphatischer Kohlenstoff-Kohlenstoff-Mehrfachbindung mit 2 bis 8 Kohlenstoffatomen je Rest,

**c**    die Werte 0, 1, 2 oder 3 und

**d**    die Werte 0, 1 oder 2 bedeuten,

mit der Maßgabe, daß durchschnittlich mindestens 2 Reste **R²** je Molekül vorliegen.

Die Organopolysiloxane (1) besitzen vorzugsweise eine durchschnittliche Viskosität von mindestens 100, insbesondere mindestens 1000 mPa·s, und vorzugsweise höchstens $10^6$, insbesondere höchstens $10^5$ mPa·s bei 25°C.

Beispiele für unsubstituierte Kohlenwasserstoffreste **R¹** sind die für **R** aufgeführten Beispiele für von aliphatischen Kohlenstoff-Kohlenstoff-Mehrfachbindungen freien Kohlenwasserstoffresten. Beispiele für mit Halogenatomen substituierte Kohlenwasserstoffreste **R¹** sind der 3,3,3-Trifluor-n-propylrest, der 2,2,2,2',2',2'-Hexafluorisopropylrest, der Heptafluorisopropylrest, der 3-Chlor-n-propylrest, der 2-Ethylbromidrest und der 3-Propylbromidrest.

Vorzugsweise bedeutet **R¹** $C_1$- bis $C_6$-Kohlenwasserstoffreste, insbesondere Methyl-, Ethyl- und Phenylreste. Vorzugsweise sind die Reste **R¹** nicht substituiert.

Beispiele für einwertige Kohlenwasserstoffreste mit aliphatischer Kohlenstoff-Kohlenstoff-Mehrfachbindung mit 2 bis 8 Kohlenstoffatomen je Rest **R²** sind Alkenylreste, wie der Vinyl-, 5-Hexenyl-, 1-Propenyl-, Allyl-, 1-Butenyl- und 1-Pentenylrest; und Alkinylreste, wie der Ethinyl-, Propargyl- und 1-Propinylrest.

Vorzugsweise weisen die Organopolysiloxane (1) mindestens 90, insbesondere mindestens 95 Mol-% Einheiten der allgemeinen Formel II auf, in denen die Summe c+d = 2 beträgt.

Vorzugsweise weisen die Organopolysiloxane (1) mindestens 60, insbesondere mindestens 80, speziell mindestens 95 Mol-% Einheiten der allgemeinen Formel II auf, in denen d den Wert 0 hat.

Vorzugsweise werden auf 100 Gewichtsteile der Organopolysiloxane (1) mindestens 5, vorzugsweise mindestens 10, insbesondere mindestens 20 Gewichtsteile und höchstens 200, vorzugsweise höchstens 150, insbesondere höchstens 100 Gewichtsteile verstärkende Füllstoffe (2) eingesetzt.

Vorzugsweise werden auf 100 Gewichtsteile der Organopolysiloxane (1) insgesamt mindestens 0,05 Gewichtsteile mindestens 0,05 Gewichtsteile Silanolverbindungen (3a) und/oder gesättigte $C_1$- bis $C_{18}$-Alkanole (3b) eingesetzt.

Zwei oder mehr lagerfähige Komponenten, aus denen durch Vermischen anwendungsfertige, additionsvernetzende Organopolysiloxanzusammensetzungen abgemischt werden können, werden durch Vermischen der Bestandteile, die ausgewählt werden aus

(1a) Organopolysiloxanen, die Reste mit aliphatischen Kohlenstoff-Kohlenstoff-Mehrfachbindungen aufweisen,

(1b) Organopolysiloxanen mit Si-gebundenen Wasserstoffatomen oder anstelle von Organopolysiloxanen (1a) und (1b)

(1c) Organopolysiloxanen, die Reste mit aliphatischen Kohlenstoff-Kohlenstoff-Mehrfachbindungen und Si-gebundene Wasserstoffatome aufweisen, und

(2) vorhydrophobierte, oxidische, verstärkende Füllstoffe gemäß Anspruch 1 und

(3) auf 100 Gewichtsteile der Organopolysiloxane (1) 0,01 bis 1 Gewichtsteile an Verbindungen, die ausgewählt werden aus Silanolverbindungen (3a) und gesättigten $C_1$- bis $C_{18}$-Alkanolen (3b) gemäß Anspruch 1,

(4) Übergangsmetallkatalysator und

(5) Inhibitoren

hergestellt, mit der Maßgabe, daß in keine Komponente gleichzeitig Übergangsmetallkatalysator (4) und Bestandteile (1b) oder (1c) eingemischt werden.

Bei der Lagerung der vernetzbaren Organopolysiloxanzusammensetzungen werden der Übergangsmetallkatalysator (4) und die Organopolysiloxane (1c), die Reste mit aliphatischen Kohlenstoff-Kohlenstoff-Mehrfachbindungen und Si-gebundene Wasserstoffatome aufweisen, in getrennten Komponenten aufbewahrt. Ebenso werden der Übergangsmetallkatalysator (4) und die Organopolysiloxane (1b), die Si-gebundene Wasserstoffatome aufweisen, in getrennten Komponenten aufbewahrt.

Vorzugsweise werden die Verbindungen (3) bei der Abmischung der Komponenten aus den Bestandteilen (1a) bis (5) zugegeben.

Als Organopolysiloxane (1a-c) werden vorzugsweise lineare oder verzweigte Organopolysiloxane aus Einheiten der vorstehend aufgeführten allgemeinen Formel II eingesetzt.

Die Organopolysiloxane (1a) weisen vorzugsweise durchschnittlich 2 bis 10, insbesondere 2 bis 4 aliphatische Kohlenstoff-Kohlenstoff-Mehrfachbindungen pro Molekül auf. Vorzugsweise weisen die endständigen Einheiten der allgemeinen Formel II aliphatische Kohlenstoff-Kohlenstoff-Mehrfachbindungen auf. Vorzugsweise sind die aliphatischen Kohlenstoff-Kohlenstoff-Mehrfachbindungen Doppelbindungen.

Organopolysiloxane (1a) besitzen vorzugsweise eine durchschnittliche Viskosität von mindestens 100, insbesondere mindestens 1000 mPa·s, und vorzugsweise höchstens $10^5$, insbesondere höchstens 5 x $10^4$ mPa·s bei 25°C.

Die Organopolysiloxane (1b) mit Si-gebundenen Wasserstoffatomen weisen vorzugsweise durchschnittlich 2 bis 50, insbesondere 5 bis 20 Si-gebundene Wasserstoffatome pro Molekül auf.

Die Organopolysiloxane (1b) besitzen vorzugsweise eine durchschnittliche Viskosität von mindestens 10, insbesondere mindestens 30 mPa·s, und vorzugsweise höchstens 5000, insbesondere höchstens 1000 mPa·s bei 25°C.

Die Organopolysiloxane, die Reste mit aliphatischen Kohlenstoff-Kohlenstoff-Mehrfachbindungen und Si-gebundene Wasserstoffatome aufweisen (1c), besitzen vorzugsweise eine durchschnittliche Viskosität von mindestens 100, insbesondere mindestens 1000 mPa·s, und vorzugsweise höchstens $10^5$, insbesondere höchstens 5 x $10^4$ mPa·s bei 25°C.

Die durch Abmischen der Komponenten hergestellten anwendungsfertigen additionsvernetzenden Organopolysiloxanzusammensetzungen weisen vorzugsweise eine Viskosität von mindestens 1000 mPa·s bei 25°C auf.

Als Übergangsmetallkatalysatoren (4) werden vorzugsweise Platinmetalle und/oder deren Verbindungen eingesetzt, vorzugsweise Platin und/oder dessen Verbindungen. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z. B. $PtCl_4$, $H_2PtCl_6 \cdot 6H_2O$, $Na_2PtCl_4 \cdot 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe.

Übergangsmetallkatalysator (4) wird vorzugsweise in Mengen von 0,5 bis 500 Gewichts-ppm (Gewichtsteilen je Million Gewichtsteilen), insbesondere 2 bis 400 Gewichts-ppm, jeweils berechnet als elementares Übergangsmetall und bezogen auf das Gesamtgewicht der Organopolysiloxane (1a-c) eingesetzt. Die meisten der oben genannten Übergangsmetallkatalysatoren sind dermaßen aktiv, daß den vernetzbaren Organopolysiloxanzusammensetzungen ein Inhibitor zugesetzt werden muß, der die vorzeitige Vernetzung zum Elastomeren verhindert. Nicht notwendig ist eine solche Inhibierung, falls beispielsweise Ammonium-Platinkomplexe eingesetzt werden.

Inhibitoren (5) sind an sich bekannt. Beispiele hierfür sind acetylenisch ungesättigte Alkohole, wie 3-Methyl-1-butin-3-ol, 1-Ethinylcyclohexan-1-ol, 3,5-Dimethyl-1-hexin-3-ol und 3-Methyl-1-pentin-3-ol.

Beispiele für Inhibitoren (5) auf Vinylsiloxanbasis sind 1,1,3,3-Tetramethyl-1,3-divinylsiloxan und vinylgruppenhaltige Poly-, Oligo- und Disiloxane.

Bei additionsvernetzbaren Mehrkomponentensystemen, wie Flüssigkautschuken wird gefordert, daß eine Mischung aus den Komponenten bei niedriger Temperatur lange verarbeitbar bleibt. Bei erhöhter Temperatur muß aber dagegen eine sehr schnelle Vulkanisation ablaufen, um in Formgebungsverfahren, wie der Spritzgußtechnik hohe Produktivität zu gewährleisten.

Die lange Topfzeit bei niedriger Temperatur wird durch die Anwesenheit von Inhibitoren erreicht. Die üblichen Inhibitoren (5), wie Ethinylcyclohexanol oder Methylbutinol erhöhen jedoch die als Anspringtemperatur bezeichnete Temperatur, an der die Vulkanisation beginnt. Die Anspringtemperatur wird mit wachsender Inhibitormenge erhöht. Deshalb ist die maximale Inhibitormenge durch die gewünschte Anspringtemperatur begrenzt. Bei zu hoher Anspringtemperatur, beispielsweise ab 125°C, treten auch bei erhöhter Temperatur Vulkanisationsstörungen auf.

Der Zusatz von Silanolverbindungen (3a) zu additionsvernetzbaren Organpolysiloxanzusammensetzungen bewirkt, daß die Vulkanisation bei niedrigen Temperaturen deutlich gehemmt wird, die Anspringtemperatur aber nicht beeinflußt wird. Dadurch wird es möglich, additionsvernetzbare Organopolysiloxanzusammensetzungen mit langer Topfzeit bei niedrigen Temperaturen und gleichzeitig niedriger Anspringtemperatur herzustellen.

In den nachfolgenden Beispielen sind, falls jeweils nicht anders angegeben,

a) alle Mengenangaben auf das Gewicht bezogen;

b) alle Drücke 0,10 MPa (abs.);

c) alle Temperaturen 20° C .

## Beispiele

### Beispiel 1: Herstellung einer Grundmischung für additionsvernetzbare Organopolysiloxanzusammensetzungen mittels vorhydrophobiertem Füllstoff

In einem 15 l Laborkneter werden 2,4 kg eines mit Vinylgruppen terminierten Dimethylpolysiloxans mit einer Viskosität von 7000 mPa·s vorgelegt, der Kneter auf 150°C aufgeheizt, und 1,8 kg hydrophobe pyrogene hochdisperse Kieselsäure Wacker $HDK^R$ SKS 130 von Wacker-Chemie GmbH, München innerhalb von 1 h eingearbeitet. Anschließend wird ca. 1 h bei einer Temperatur von 100°C unter geringem Inertgasstrom geknetet und die Masse anschließend mit 2,0 kg eines mit Vinylendgruppen terminierten Dimethylpolysiloxans mit einer Viskosität von 7000 mPa·s verdünnt.

### Beispiel 2: erfindungsgemäße Verbesserung der Lagerstabilität einer nach Beispiel 1 hergestellten Grundmischung durch Zusatz von Trimethylsilanol

In nachstehender Tabelle I ist die Zunahme der Viskosität für eine Grundmischung nach Beispiel 1 ohne und nach Beispiel 2 mit Zusatz von 0,3 Gew.-% Trimethylsilanol aufgeführt. Trimethylsilanol wird beim Verdünnen mit dem in Beispiel 1 beschriebenen Dimethylpolysiloxan zugesetzt. Die Lagertemperatur beträgt 20°C.

EP 0 776 936 B1

Tabelle I

| Lagerzeit in Tagen | 0 | 20 | 32 | 49 | 60 | 77 |
|---|---|---|---|---|---|---|
| Beispiel 1 Viskosität [1000 mPa·s] | 165 | 379 | 538 | 621 | 767 | 1094 |
| Beispiel 2 Viskosität [1000 mPa·s] | 145 | 174 | 179 | 183 | 192 | 198 |

**Vergleichsbeispiel 3: Herstellung einer Flüssigkautschuk A- und B-Komponente mit kurzer Raumtemperatur-Topfzeit.**

Die A-Komponente wird hergestellt, indem zu 1 kg Grundmischung aus Beispiel 1 ein Platinkatalysator zugemischt wird. Die Platinkonzentration bezogen auf die gesamte A-Komponente beträgt 3.0 ppm. Ferner werden noch 0,6 g Ethinylcyclohexanol eingemischt.

Die B-Komponente besteht aus 1 kg Grundmischung aus Beispiel 1 und 45 g eines linearen Polydimethylsiloxans mit einer Si-H-Konzentration von ca. 0,5 Gew-% und einer Viskosität von 300 mPa·s als Vernetzer sowie 0,6 g Ethinylcyclohexanol.

Die A- und B-Komponenten werden im Verhältnis 1:1 vermischt, ca. 5g dieser Mischung in ein Schnappdeckelglas gefüllt und bei Raumtemperatur gelagert. Nach 5 h und 24 h wird mit einem Spatel die Konsistenz geprüft. Bereits nach 5 h ist elastisches Verhalten festzustellen.

**Beispiel 4: erfindungsgemäße Herstellung einer Flüssigkautschuk A- und B-Komponente mit langer Raumtemperatur-Topfzeit**

A- und B-Komponenten werden analog Beispiel 3 hergestellt, mit dem Unterschied, daß zu der Grundmischung 0,3 Gew-% Trimethylsilanol eingemischt werden.

Eine Abmischung aus A- und B-Komponente ist nach 1 d bei Raumtemperatur in der Konsistenz unverändert. Selbst nach 3tägiger Lagerung bei Raumtemperatur ist kaum eine Konsistenzveränderung festzustellen.

**Beispiel 5: erfindungsgemäße Verbesserung der Lagerstabilität einer nach Beispiel 3 hergestellten B-Komponente durch Zusatz von Trimethylsilanol**

Es wurden B-Komponenten getestet, da diese in der Regel weniger stabil sind und somit deutlichere Effekte auftreten.

In nachstehender Tabelle II ist die Zunahme der Viskosität einer B-Komponente nach Beispiel 3 ohne und nach Beispiel 4 mit Zusatz von 0,3 Gew.-% Trimethylsilanol aufgeführt. Die Lagertemperatur beträgt 20°C.

Tabelle II

| Lagerzeit in Tagen | 0 | 7 | 14 | 21 | 28 | 35 |
|---|---|---|---|---|---|---|
| Beispiel 3 Viskosität [1000 mPa·s] | 542 | 1238 | 1701 | 2091 | 2358 | 2974 |
| Beispiel 4 Viskosität [1000 mPa·s] | 519 | 520 | 521 | 521 | 524 | 525 |

**Patentansprüche**

1.   Verfahren zur Herstellung von Organopolysiloxanzusammensetzungen, bei dem

(1) Organopolysiloxane, die durchschnittlich mindestens 2 aliphatische Kohlenstoff-Kohlenstoff-Mehrfachbindungen pro Molekül aufweisen,
(2) vorhydrophobierte oxidische verstärkende Füllstoffe mit einem durch die Hydrophobierung erhaltenen Kohlenstoffgehalt von mindestens 0,5 Gew.-% und
(3) auf 100 Gewichtsteile der Organopolysiloxane (1) 0,01 bis 1 Gewichtsteile an Verbindungen, die ausgewählt werden aus

(3a) Silanolverbindungen der allgemeinen Formel I

$$R\text{-}[SiR_2\text{-}O\text{-}]_a H \qquad\qquad (I),$$

wobei

**R** $C_1$-bis $C_6$-Alkylreste und
**a** Werte von 1 bis 10 bedeuten, und

(3b) gesättigten $C_1$- bis $C_{18}$-Alkanolen

vermischt werden.

2. Verfahren nach Anspruch 1, bei dem Silanolverbindungen (3a) eingesetzt werden, bei denen in der allgemeinen Formel I **a** die Werte 1, 2 oder 3 aufweist.

3. Verfahren nach Anspruch 1, bei dem gesättigte $C_3$- bis $C_8$-Alkanole (3b) eingesetzt werden.

4. Verfahren nach einem der Ansprüche 1 bis 3, bei dem die verstärkenden Füllstoffe (2) pyrogen hergestellte Kieselsäure oder gefällte Kieselsäure mit einer BET-Oberfläche von mindestens 50 m²/g sind.

5. Verfahren nach einem der Ansprüche 1 bis 4, bei dem als Organopolysiloxane (1) lineare oder verzweigte Organopolysiloxane aus Einheiten der allgemeinen Formel II

$$R^1_c R^2_d SiO_{\frac{4-c-d}{2}} \qquad\qquad (II),$$

eingesetzt werden, wobei

**R¹** einwertige, gegebenenfalls mit Halogenatomen substituierte $C_1$- bis $C_{10}$-Kohlenwasserstoffreste, die frei sind von aliphatischen Kohlenstoff-Kohlenstoff-Mehrfachbindungen ,
**R²** Wasserstoffatome, Hydroxylgruppen, einwertige Kohlenwasserstoffreste mit aliphatischer Kohlenstoff-Kohlenstoff-Mehrfachbindung mit 2 bis 8 Kohlenstoffatomen je Rest,
**c** die Werte 0, 1, 2 oder 3 und
**d** die Werte 0, 1 oder 2 bedeuten,

mit der Maßgabe, daß durchschnittlich mindestens 2 Reste **R²** je Molekül vorliegen.

6. Verfahren nach einem der Ansprüche 1 bis 5, bei dem die Organopolysiloxane (1) mindestens 90 Mol-% Einheiten der allgemeinen Formel II aufweisen, in denen die Summe c+d = 2 beträgt.

7. Verfahren zur Herstellung von zwei oder mehr lagerfähigen Komponenten, aus denen durch Vermischen anwendungsfertige, additionsvernetzende Organopolysiloxanzusammensetzungen abgemischt werden können, bei dem die Komponenten durch Vermischen der Bestandteile, die ausgewählt werden aus

(1a) Organopolysiloxanen, die Reste mit aliphatischen Kohlenstoff-Kohlenstoff-Mehrfachbindungen aufweisen,
(1b) Organopolysiloxanen mit Si-gebundenen Wasserstoffatomen oder anstelle von Organopolysiloxanen (1a) und (1b)
(1c) Organopolysiloxanen, die Reste mit aliphatischen Kohlenstoff-Kohlenstoff-Mehrfachbindungen und Si-gebundene Wasserstoffatome aufweisen, und
(2) vorhydrophobierte, oxidische, verstärkende Füllstoffe gemäß Anspruch 1 und
(3) auf 100 Gewichtsteile der Organopolysiloxane (1) 0,01 bis 1 Gewichtsteile an Verbindungen, die ausgewählt werden aus Silanolverbindungen (3a) und gesättigten $C_1$- bis $C_{18}$-Alkanolen (3b) gemäß Anspruch 1,
(4) Übergangsmetallkatalysator und

(5) Inhibitoren

hergestellt werden, mit der Maßgabe, daß in keine Komponente gleichzeitig Übergangsmetallkatalysator (4) und Bestandteile (1b) oder (1c) eingemischt werden.

**Claims**

1. Process for the preparation of an organopolysiloxane composition in which

   (1) organopolysiloxanes which contain on average at least 2 aliphatic carbon-carbon multiple bonds per molecule,
   (2) prehydrophobicized oxidic reinforcing fillers having a carbon content, obtained by the hydrophobicization, of at least 0.5 % by weight and
   (3) 0.01 to 1 part by weight of compounds per 100 parts by weight of the organopolysiloxanes (1) which compounds are chosen from

      (3a) silanol compounds of the general formula I

   $$R\text{-}[SiR_2\text{-}O\text{-}]_a H \tag{I}$$

      in which

      R   is $C_1$- to $C_6$-alkyl radicals and
      a   has values from 1 to 10 and

      (3b) saturated $C_1$- to $C_{18}$-alkanols

   are mixed.

2. Process according to Claim 1, in which silanol compounds (3a) in which a in the general formula I has the values 1, 2 or 3 are employed.

3. Process according to Claim 1, in which saturated $C_3$- to $C_8$-alkanols (3b) are employed.

4. Process according to one of Claims 1 to 3, in which the reinforcing fillers (2) are pyrogenically prepared silica or precipitated silica having a BET surface area of at least 50 $m^2$/g.

5. Process according to one of Claims 1 to 4, in which linear or branched organopolysiloxanes of units of the general formula II

   $$R^1_c R^2_d SiO_{\frac{4-c-d}{2}} \tag{II},$$

   in which

   $R^1$   is monovalent $C_1$- to $C_{10}$-hydrocarbon radicals which are optionally substituted by halogen atoms and are free from aliphatic carbon-carbon multiple bonds,
   $R^2$   is hydrogen atoms, hydroxyl groups or monovalent hydrocarbon radicals having an aliphatic carbon-carbon multiple bond with 2 to 8 carbon atoms per radical,
   c   has the values 0, 1, 2 or 3 and
   d   has the values 0, 1 or 2,
      with the proviso that on average at least 2 radicals $R^2$ are present per molecule,

   are employed as the organopolysiloxanes (1).

6. Process according to one of Claims 1 to 5, in which the organopolysiloxanes (1) contain at least 90 mol % of units of the general formula II in which the sum c+d 2.

7. Process for the preparation of two or more storable components from which ready-to-use, addition-crosslinking organopolysiloxane compositions can be blended by mixing in which the components are prepared by mixing the constituents, which are chosen from

(1a) organopolysiloxanes which contain radicals with aliphatic carbon-carbon multiple bonds,
(1b) organopolysiloxanes with Si-bonded hydrogen atoms, or, instead of organopolysiloxanes (1a) and (1b),
(1c) organopolysiloxanes which contain radicals with aliphatic carbon-carbon multiple bonds and Si-bonded hydrogen atoms, and
(2) prehydrophobicized oxidic reinforcing fillers according to Claim 1 and
(3) 0.01 to 1 part by weight of compounds per 100 parts by weight of the organopolysiloxanes (1), which compounds are chosen from silanol compounds (3a) and saturated $C_1$- to $C_{18}$-alkanols (3b) according to Claim 1,
(4) a transition metal catalyst and
(5) inhibitors
with the proviso that the transition metal catalyst (4) and constituents (1b) or (1c) are not mixed simultaneously into any component.

**Revendications**

1. Procédé de préparation de compositions d'organopolysiloxane, dans lequel on mélange

(1) des organopolysiloxanes qui renferment en moyenne au moins 2 liaisons multiples carbone-carbone aliphatiques par molécule,
(2) des charges oxydiques de renforcement préhydrophobisées ayant une teneur en carbone, obtenue par l'hydrophobisation, d'au moins 0,5% en poids, et
(3) de 0,01 à 1 partie en poids de composés pour 100 parties en poids des organopolysiloxanes (1), lesquels composés sont choisis parmi

(3a) des composés silanol de formule générale I

$$R\text{-}[SiR_2\text{-}O\text{-}]_a H \qquad (I),$$

dans laquelle

R représente les radicaux alkyle en $C_1$ à $C_6$ et
a vaut de 1 à 10, et

(3b) des alcanols en $C_1$ à $C_{18}$ saturés.

2. Procédé selon la revendication 1, dans lequel on utilise des composés silanol (3a) dans lesquels, dans la formule générale I, a vaut 1, 2 ou 3.

3. Procédé selon la revendication 1, dans lequel on utilise des alcanols en $C_3$ à $C_8$ saturés (3b).

4. Procédé selon l'une quelconque des revendications 1 à 3, dans lequel les charges de renforcement (2) sont de la silice préparée par pyrogénation ou de la silice précipitée ayant une surface spécifique BET d'au moins 50 $m^2$/g.

5. Procédé selon l'une quelconque des revendications 1 à 4, dans lequel on utilise, en tant qu'organopolysiloxanes (1), des organopolysiloxanes linéaires ou ramifiés à base de motifs de formule générale II

$$R_c^1 R_d^2 SiO_{\frac{4-c-d}{2}} \qquad \text{(II)},$$

dans laquelle

R$^1$ représente des radicaux hydrocarbonés en C$_1$ à C$_{10}$ monovalents, éventuellement substitués par des atomes d'halogène, et qui sont dépourvus de liaisons multiples carbone-carbone aliphatiques,

R$^2$ représente des atomes d'hydrogène, des groupes hydroxy ou des radicaux hydrocarbonés monovalents renfermant une liaison multiple carbone-carbone aliphatique ayant de 2 à 8 atomes de carbone par radical,

c vaut 0, 1, 2 ou 3 et

d vaut 0, 1 ou 2,

à condition qu'en moyenne au moins 2 radicaux R$^2$ soient présents par molécule.

**6.** Procédé selon l'une quelconque des revendications 1 à 5, dans lequel les organopolysiloxanes (1) renferment au moins 90% en moles de motifs de formule générale II, dans lesquels la somme c + d vaut 2.

**7.** Procédé de préparation de deux composants stockables ou plus à partir desquels des compositions d'organopolysiloxane prêtes à l'emploi et réticulant par addition peuvent être mêlées par mélange, dans lequel les composants sont préparés en mélangeant les constituants qui sont choisis parmi

(1a) des organopolysiloxanes qui renferment des radicaux ayant des liaisons multiples carbone-carbone aliphatiques,

(1b) des organopolysiloxanes ayant des atomes d'hydrogène liés à Si ou, à la place des organopolysiloxanes (1a) et (1b),

(1c) des organopolysiloxanes qui renferment des radicaux ayant des liaisons multiples carbone-carbone aliphatiques et des atomes d'hydrogène liés à Si, et

(2) des charges oxydiques de renforcement préhydrophobisées selon la revendication 1 et

(3) de 0,01 à 1 partie en poids de composés pour 100 parties en poids des organopolysiloxanes (1), lesquels composés sont choisis parmi des composés silanol (3a) et des alcanols en C$_1$ à C$_{18}$ saturés (3b) selon la revendication 1,

(4) un catalyseur à métal de transition et

(5) des inhibiteurs

à condition que le catalyseur à métal de transition (4) et le constituant (1b) ou (1c) ne soient mélangés simultanément dans aucun composant.